# EUROPÄISCHE PATENTSCHRIFT

(11) **EP 0 844 913 B1**
(45) Veröffentlichungstag und Bekanntmachung des Hinweises auf die Patenterteilung: **25.09.2002**
(21) Anmeldenummer: 97928194.6
(22) Anmeldetag: 13.06.1997
(51) Int. Cl.: B05D 7/14, C09D 5/03, C09D 163/00, C09D 175/16, C09D 175/04

(54) **VERFAHREN ZUR BESCHICHTUNG VON METALLBÄNDERN**
METAL STRIP COATING PROCESS
PROCEDE DE REVETEMENT DE FEUILLARDS METALLIQUES

(30) Priorität: 14.06.1996 DE 19623717; 12.08.1996 DE 19632426
(43) Veröffentlichungstag der Anmeldung: 03.06.1998
(73) Patentinhaber: BASF Lacke und Farben AG, 48165 Münster (DE)
(72) Erfinder: LESSMEISTER, Peter, D-48165 Münster (DE); RADEMACHER, Josef, Beverly Hills, MI 48025 (US)
(74) Vertreter: Fitzner, Ulrich, Dr.
(86) Internationale Anmeldenummer: EP9703086
(87) Internationale Veröffentlichungsnummer: WO97047400

(56) Entgegenhaltungen:
- EP-A- 0 254 152
- EP-A- 0 433 533
- EP-A- 0 585 742
- EP-A- 0 661 091
- EP-A- 0 792 921
- WO-A-92/01757
- WO-A-95/21706
- WO-A-96/15199
- DE-A- 4 038 681
- DE-A- 4 204 266
- DE-A- 19 545 424
- US-A- 4 183 974
- DATABASE WPI Section Ch, Week 9732 Derwent Publications Ltd., London, GB; Class A17, AN 97-347647 XP002054219 & JP 09 143 401 A (TOMOEGAWA SEISHISHO KK) , 3.Juni 1997

## Beschreibung

Die vorliegende Erfindung betrifft ein Verfahren zur Beschichtung von Metallbändern, vorzugsweise aus Stahl oder Aluminium.

### Stand der Technik

Das genannte Verfahren zur Beschichtung von Metallbändern ist in der Fachsprache unter dem Begriff "coil coating" bekannt. Bei derartigen Verfahren werden Bleche, vorzugsweise aus Stahl oder Aluminium gereinigt, mit einem Lack beaufschlagt und anschließend der Weiterverarbeitung zugeführt.

Die wichtigsten Einsatzgebiete sind Trapezprofile, beschichtet mit wetterbeständigen Lacken für Fassaden und Dächer sowie Türen, Fensterrahmen, Tore, Dachrinnen, Jalousien u.ä... Für den Bauinnenbereich finden coil-coatingbeschichtete Bleche für Trennwände und Deckenelemente ihre Hauptanwendung. Andere Einsatzgebiete sind aber auch Stahlmöbel, Regalbau, Ladenbau und Geräteverkleidungen. Lampen und Leuchten bilden ein weiteres wichtiges Anwendungssegment. Ebenso gibt es im Fahrzeugbereich eine breite Anwendungspalette. LKW-Aufbauten und Automobilanbauteile werden vielfach aus vorbeschichteten Materialien gefertigt.

Zum Beschichten des eingesetzten Substrats wird vielfach eine Vorbehandlung durchgeführt. Als erste Lackierschicht wird vielfach auf der späteren Sichtseite ein Primer in einer Schichtdicke von 5 bis 10 µm aufgetragen. Nach dem ersten Trocknerdurchlauf erfolgt dann die eigentliche Decklackierung, die nach dem Trocknen eine Schichtdicke von etwa 20 µm aufweist. Zum Schutz vor mechanischen Verletzungen wird diese Oberfläche teilweise noch mit einer temporären Schutzfolie im heißen Zustand kaschiert. Parallel zu der Sichtseitenbeschichtung werden auch die Rückseiten mitlackiert, so daß auch hier ein angepaßter Schutzfilm aufgetragen wird. Als Primer kommen beispielsweise Polyesterharze zum Einsatz. Für den Einsatz von coil-coating-beschichteten Fassaden und Dächern im korrosiven Industrieklima kommen als Primer epoxidharzhaltige Systeme zum Einsatz.

Als Decklack werden in erster Linie Flüssiglacke mit unzähligen Farbtönen eingesetzt. Entsprechend dem Anwendungsbereich kommen z.B. Polyester- sowie Polyurethan-Decklacke zur Anwendung. Die normalen Schichtdicken der Decklacke liegen im allgemeinen bei etwa 20 µm.

Neben den genannten flüssigen Primern und Decklacken ist es auch bekannt, Pulverlacke zur Beschichtung von Metallbändern im coil-coating-Verfahren zu verwenden. Pulverlacke haben gegenüber den flüssigen Lacken den großen Vorteil, daß sie lösemittelfrei und damit umweltfreundlicher sind. Gegenüber den oben beschriebenen Flüssiglacken ist jedoch nachteilig, daß die notwendigen Pulverlack-Schichtdicken sehr hoch sind. Diese liegen nämlich zwischen 40 und 50 µm. Bei dünnerer Applikation der Pulverlacke ist die Beschichtung nicht mehr porenfrei. Dies führt zu optischen Defekten und Korrosionsangriffspunkten.

Pulverlacke sind aus verschiedenen Dokumenten hinlänglich bekannt. So werden z.B. in der EP 0 661 091 Pulverlacke beschrieben, die eine bestimmte Teilchengrößenverteilung aufweisen, ohne daß jedoch die genaue Zusammensetzung der Pulverlacke für dieses Dokument von höherer Bedeutung wäre. Aus der WO 95/21706 sind Pulverlacke bekannt, die jedoch keine bestimmte Partikelgrößenverteilung aufweisen und nicht als Pulver sondern in Form einer Schmelze auf das Substrat appliziert werden. Die EP 0 254 152 beschreibt Pulverlacke auf Basis von Polyisocyanathärtern. Eine Anwendung für das Coil-Coating-Verfahren wird jedoch ebensowenig beschrieben, wie die Teilchengrößenverteilung. Die WO 96/15199 hingegen beschreibt die Anwendung von Pulverlacken im Coil-Coating-Verfahren, wobei die Korngrößenverteilung auf Volumenbasis angegeben wird.

### Allgemeine Beschreibung der Erfindung

Aufgabe der vorliegenden Erfindung ist es nunmehr, ein Verfahren zur Beschichtung von Metallbändern, vorzugsweise aus Stahl oder Aluminium durch Reinigen, Aufbringen von Pulverlack und Einbrennen zur Verfügung zu stellen, daß die Erzielung von Schichtdicken von weniger als 20 µm, vorzugsweise weniger als 15 µm, besonders bevorzugt weniger als 10 µm erlaubt.

Diese Aufgabe wird dadurch gelöst, daß
1) der Pulverlack mindestens ein Polyhydroxy-funktionelles Harz A) mit einer Hydroxylzahl von 5 bis 200 mg KOH/g und mindestens einen Polyisocyanathärter B) mit mehr als einer Isocyanatgruppe pro Molekül enthält, und
2) der Pulverlack eine derartige Korngrößenverteilung aufweist, daß
   a) mindestens 90 Massenprozent der Pulverlackteilchen eine Teilchengröße zwischen 1 und 100, vorzugsweise 1 und 50 µm aufweisen,
   b) die maximale Teilchengröße der Pulverlackteilchen für mindestens 99 Massenprozent der Teilchen ≤ 150 µm beträgt,
   c) die mittlere Teilchengröße der Pulverlackteilchen zwischen > 5 und 60 µm, vorzugsweise 5 und 40 µm liegt und
   d) die Steilheit der Kornverteilungskurve am Wendepunkt ≥ 50, vorzugsweise ≥ 100 ist.

In einer bevorzugten Ausführungsform weist der Pulverlack eine derartige Korngrößenverteilung auf, daß
a) mindestens 90 Massenprozent der Pulverlackteilchen eine Teilchengröße zwischen 1 und 60 µm, bevorzugt zwischen 1 und 40 µm, aufweist,
b) die maximale Teilchengröße der Pulverlackteilchen für mindestens 99 Massenprozent der Teilchen ≤ 100 µm, bevorzugt ≤ 60 µm, beträgt,
c) die mittlere Teilchengröße der Pulverlackteilchen zwischen 5 und 20 µm, bevorzugt zwischen 5 und 12 um, liegt und
d) die Steilheit der Kornverteilungskurve am Wendepunkt ≥ 100, bevorzugt ≥ 150, ist.

In einer weiteren bevorzugten Ausführungsform ist die Korngrößenverteilung derart, daß
a) mindestens 90 Massenprozent der Pulverlackteilchen eine Teilchengröße zwischen 5 und 25 µm aufweisen,
b) die maximale Teilchengröße der Pulverlackteilchen für mindestens 99 Massenprozent der Teilchen ≤ 40 µm beträgt,
c) die mittlere Teilchengröße der Pulverlackteilchen zwischen 5 und 12 µm liegt und
d) die Steilheit der Kornverteilungskurve am Wendepunkt ≥ 200 ist.

### Die Komponenten des Pulverlacks

Im folgenden sollen nun zunächst die einzelnen Komponenten der erfindungsgemäßen Pulverlacke näher erläutert werden.

Als Polyhydroxy-funktionelle Harze können beispielsweise Polyester-, Polyether-, Polyurethan-, Polyacrylat- und/oder Polysiloxanharze mit gewichtsmittleren Molekulargewichten Mw zwischen 500 und 200.000, vorzugweise zwischen 1.000 und 100.000 Dalton eingesetzt werden.

Geeignete Polyhydroxy-funktionelle Polyester A (Polyesterpolyole) werden beispielsweise durch Veresterung von organischen Dicarbonsäuren oder ihren Anhydriden mit organischen Di- und/oder Polyolen hergestellt, wobei die Bildung von Verzweigungsstellen zu Lasten freier Hydroxylgruppen im Polyester unterdrückt werden muß.
Als Dicarbonsäuren werden vorzugsweise aliphatische, cycloaliphatische gesättigte oder ungesättigte und/oder aromatische zweibasische Carbonsäuren, sowie deren Anhydride und/oder deren Ester eingesetzt. Beispielhaft seien genannt: Phthalsäure(anhydrid), Isophthalsäure, Terephthalsäure, Tetrahydrooder Hexahydrophthalsäure(anhydrid), Endomethylentetrahydrophthalsäure, Bernsteinsäure, Glutarsäure, Sebacinsäure, Azelainsäure, Fumar- und Maleinsäure. Am gebräuchlichsten sind Isophthalsäure und Phthalsäure(anhydrid).
Vorzugsweise werden als Polyolbausteine aliphatische, cycloaliphatische und/oder araliphatische Alkohole mit 1 bis 6, vorzugsweise 1 bis 4 an nichtaromatische Kohlenstoffatome gebundene Hydroxylgruppen verwendet.

Beispielhaft für seien genannt: Ethylengglykol, Propandiol-1,2 und -1,3, Butandiol-1,2, -1,3 und 1,4, 2-Ethylpropandiol-1,3, 2-Ethylhexandiol-1,3, 1,3-Neopentylglykol, 2,2-Dimethylpentandiol-1,3, Hexandiol-1,6, Cyclohexandiol-1,2 und -1,4, 1,2- und 1,4-Bis(hydroxymethyl)cyclohexan, Adipinsäure-bis-(ethylenglykolester), Etheralkohole wie Di- und Triethylenglykol, Dipropylenglykol, perhydrierte Bisphenole, Butantriol-1,2,4, Hexantriol-1,2,6, Trimethylolethan, Trimethylolpropan, Trimethylolhexan, Glycerin, Pentaerythrit, Dipentaerythrit, Mannit und Sorbit, sowie kettenabbrechende Monoalkohole mit 1 bis 8 Kohlenstoffatomen wie Propanol, Butanol, Cyclohexanol, Benzylalkohol und Hydroxypivalinsäure. Bevorzugt eingesetzte Alkohole sind: Glycerin, Trimethylolpropan, Neopentylglykol und Pentaerythrit.

Als Polyetherpolyole A können beispielsweise Polyalkylenether mit 2 bis 6 Kohlenstoffatomen und mindestens einer freien Hydroxygruppe pro Alkyleneinheit eingesetzt werden, wobei die Zahl der sich wiederholenden Alkyleneinheiten pro Polymermolekül zwischen 2 und 100, vorzugsweise zwischen 5 und 50 liegt. Als Beispiele werden Poly-2-hydroxy-1,3-propylenoxid, Poly-2- oder Poly-3-hydroxy-1,4-butylenoxid genannt.

Bausteine der Polyhydroxy-funktionellen Polyurethane A (Polyurethanpolyole) können beispielsweise die schon zuvor beschriebenen aliphatischen, cycloaliphatischen und/oder araliphatischen Alkohole mit 1 bis 6, vorzugsweise 1 bis 4 an nicht-aromatische Kohlenstoffatome gebundenen Hydroxylgruppen sein. Weiterhin können auch die zuvor beschriebenen Polyesterpolyole selbst als Polyurethanbausteine eingesetzt werden, wobei gewährleistet sein muß, daß die eingangs genannten Molekulargewichtsgrenzen Mw von 500 bis 200.000, vorzugsweise 1.000 bis 100.000 Dalton bei der Synthese des Polyurethanpolyols nicht überschritten werden, beispielsweise bedingt durch Vernetzung.

Beispielhaft für Polyhydroxy-funktionelle Polyacrylate A (Polyacrylatpolyole) seien solche genannt, die als Comonomereinheiten vorzugsweise Hydroxyalkylester der Acrylsäure, Methacrylsäure oder einer anderen alpha,beta-ethylenisch ungesättigten Carbonsäure enthalten. Diese Ester können sich von einem Alkylenglykol ableiten, das mit der Säure verestert ist, oder sie können durch Umsetzung der Säure mit einem Alkylenoxid erhalten werden.
Als Hydroxyalkylester werden vorzugsweise Hydroxyalkylester der (Meth)acrylsäure, in denen die Hydroxyalkylgruppe bis zu 4 Kohlenstoffatome enthält, oder Mischungen aus diesen Hydroxyalkylestern eingesetzt. Beispielhaft seien genannt: 2-Hydroxyethyl(meth)acrylat, 2- oder 3-Hydroxypropyl-(meth)acrylat oder 4-Hydroxybutyl(meth)acrylat.
Die Polyacrylatpolyole können als weitere Comonomereinheiten beispielsweise aliphatische, cycloaliphatische, aromatische und/oder araliphatische (Meth)acrylate mit bis zu 20 Kohlenstoffatomen im Esterrest enthalten, wie beispielsweise: Methyl(meth)acrylat, Ethyl(meth)acrylat, Propyl(meth)acrylat, Butyl(meth)acrylat, Isobutyl(meth)acrylat, tert.-Butyl(meth)acrylat, Hexyl(meth)acrylat, 2-Ethylhexyl(meth)acrylat, Stearyl(meth)acrylat, Lauryl(meth)acrylat, Cyclohexyl(meth)acrylat, Cyclopentyl(meth)acrylat, Cyclooctyl(meth)acrylat, Phenyl(meth)acrylat, 2-Phenylethyl(meth)acrylat oder 3-Phenylpropyl(meth)acrylat. Weiterhin können vinylaromatische Kohlenwasserstoffe, wie Styrol, alpha-Alkylstyrol und Vinyltoluol, sowie (Meth)acrylamide und/oder (Meth)acrylnitril als Comonomereinheiten in den Polyacrylatpolyolen A eingesetzt werden.

Als Polyhydroxy-funktionelle Polysiloxane A (Polysiloxanpolyole) werden vorzugsweise Organopolysiloxane verwendet, die Hydroxy-funktionelle Substituenten aufweisen. Beispielhaft seien Methylhydroxyethylpolysiloxan, Methyl-3-hydroxypropylpolysiloxan oder Ethyl-3-hydroxypolysiloxan genannt. Solche Organopolysiloxane können auch als oligomere und/oder polymere Bausteine in den zuvor beschriebenen Polyhydroxy-funktionellen Harzen A enthalten sein.

Zu den genannten Organopolysiloxanen vergleiche beispielsweise Ullmanns Enzyklopädie der technischen Chemie, 4.Aufl., Band 21, Seiten 520 bis 510, Verlag Chemie, Weinheim, Deerfield Beach, Basel, 1982.

Das Polyhydroxy-funktionelle Harz wird in den erfindungsgemäßen Pulverlacken üblicherweise in einer Menge von 10 bis 90 Gew.-%, bevorzugt von 29 bis 80 Gew.-%, jeweils bezogen auf das Gesamtgewicht des Pulverlacks, eingesetzt.

Die Härterkomponente wird in den erfindungsgemäßen Pulverlacken üblicherweise in einer Menge von 10 bis 80 Gew.-%, bevorzugt von 10 bis 50 Gew.-%, jeweils bezogen auf das Gesamtgewicht des Pulverlacks, eingesetzt.

Die in den Pulverlacken eingesetzten Polyhydroxy-funktionellen Harze sind feste Polymerharze, die sich aus den bereits oben beschriebenen Komponenten zusammensetzen.

Als Polyisocyanat-Komponente bei der Synthese der Polyurethanpolyole A können aliphatische und/oder cycloaliphatische und/oder aromatische Diisocyanate eingesetzt werden. Als Beispiele für die bevorzugt eingesetzten aromatischen Diisocyanate werden Phenylendiisocyanat, Toluylendiisocyanat, Xylylendiisocyanat, Biphenylendiisocyanat, Naphtylendiisocyanat und Diphenylmethandiisocyanat genannt. Beispiele für cycloaliphatische Polyisocyanate sind Isophorondiisocyanat, Cyclopentylendiisocyanat sowie die Hydrierungsprodukte der aromatischen Diisocyanate wie Cyclohexylendiisocyanat, Methylcyclohexylendiisocyanat und Dicyclohexylmethandiisocyanat. Beispiel für aliphatische Diisocyanate sind sind Trimethylendiisocyanat, Tetramethylendiisocyanat, Pentamethylendiisocyanat, Hexamethylendiisocyanat, Propylendiisocyanat, Ethylethylendiisocyanat, Dimethylethyldiisocyanat, Methyltrimethylendiisocyanat und Trimethylhexandiisocyanat. Als weiteres Beispiel für ein aliphatisches Diisocyanat wird Tetramethylxyloldiisocyanat genannt.

Als Härterkomponente geeignet sind aliphatische und/oder cycloaliphatische und/oder aromatische Polyisocyanate, bevorzugt im festen Aggregatzustand bei Applikationstemperatur. Als Beispiele für die bevorzugt eingesetzten aromatischen Polyisocyanate werden Phenylendiisocyanat, Toluylendiisocyanat, Xylylendiisocyanat, Biphenylendiisocyanat, Naphtylendiisocyanat und Diphenylmethandiisocyanat genannt.

Beispiele für cycloaliphatische Polyisocyanate sind Isophorondiisocyanat, Cyclopentylendiisocyanat sowie die Hydrierungsprodukte der aromatischen Diisocyanate wie Cyclohexylendiisocyanat, Methylcyclohexylendiisocyanat und Dicyclohexylmethandiisocyanat. Aliphatische Diisocyanate sind Verbindungen der Formel

OCN-(CR³ ₂)r-NCO

worin r eine ganze Zahl von 2 bis 20, insbesondere 6 bis 8 ist und R³, das gleich oder verschieden sein kann, Wasserstoff oder einen niedrigen Alkylrest mit 1 bis 8 C-Atomen, vorzugsweise 1 oder 2 C-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethyldiisocyanat, Methyltrimethylendiisocyanat und Trimethylhexandiisocyanat. Als weiteres Beispiel für ein aliphatisches Diisocyanat wird Tetramethylxyloldiisocyanat genannt.

Die Härterkomponente kann neben Diisocyanaten auch einen Anteil an Polyisocyanaten mit Funktionalitäten über zwei, wie z.B. Triisocyanate, enthalten.
Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Hierzu gehören beispielsweise das Biuret von Hexamethylendiisocyanat und Wasser, das Isocyanurat des Hexamethylendiisocyanats oder das Addukt von Isophorondiisocyanat an Trimethylolpropan. Die mittlere Funktionalität kann gegebenenfalls durch Zusatz von Monoisocyanaten gesenkt werden. Beispiele für solche kettenabbrechenden Monoisocyanate sind Phenylisocyanat, Cyclohexylisocyanat und Stearylisocyanat.

Selbstverständlich sind auch mit Verzweigungsreagenzien modifizierte Härter und/oder flexibilisierte Härter geeignet. Ferner können auch Mischungen von verschiedenen der genannten Härter eingesetzt werden.

Als weitere Komponente enthält der erfindungsgemäße Pulverlack mindestens einen Härtungskatalysator, üblicherweise in einer Menge von 0,01 bis 5,0 Gew.-%, bevorzugt von 0,05 bis 2,0 Gew.-%, jeweils bezogen auf das Gesamtgewicht des Pulverlacks.

Vorteilhafterweise ist der Katalyator ausgewählt aus der Gruppe der die Umsetzung von Isocyanat- mit Hydroxylgruppen zu Urethangruppen katalysierenden Verbindungen, wie beispielsweise Dibutylzinndilaurat, Dibutylzinnmaleat, oder Mischungen aus verschiedenen der genannten Katalysatoren.

Weiterhin können die beschriebenen Pulverlacke auf Basis von Polyhydroxy-funktionellen Harzen noch 0 bis 40 Gew.-%, bevorzugt 15 bis 25 Gew.-%, Füllstoffe enthalten.

Im allgemeinen werden anorganische Füllstoffe, beispielsweise Titandioxid, wie z.B. Kronos 2160 der Firma Kronos Titan, Rutil® 902 der Firma Du Pont und RC 566 der Firma Sachtleben, Bariumsulfat und Füllstoffe auf Silikat-Basis, wie z.B. Talkum, Kaolin, Magnesiumaluminiumsilikate, Glimmer und ähnliche eingesetzt. Bevorzugt werden Titandioxid und Füllstoffe vom Quarzsand-Typ eingesetzt.

Außerdem können die Pulverlacke gegebenenfalls noch 0,01 bis 10 Gew.-%, bevorzugt 0,1 bis 2 Gew.-%, bezogen auf das Gesamtgewicht des Pulverlacks, weitere Hilfs- und Zusatzstoffe enthalten. Beispiele hierfür sind Verlaufsmittel, Rieselhilfen, Entlüftungsmittel, wie z.B. Benzoin, Pigmente oder ähnliche.

### Die Herstellung des Pulverlacks

Die Herstellung des Pulverlacks erfolgt nach den bekannten Methoden (vgl. z.B. Produktinformation der Firma BASF Lacke + Farben AG, "Pulverlacke", 1990) durch Homogenisieren und Dispergieren, beispielsweise mittels eines Extruders, Schneckenkneters, u.ä. Es ist erfindungswesentlich, daß die Pulverlacke nach ihrer Herstellung auf eine dem Anwendungszweck angepaßte Korngrößenteilung durch Vermahlen und gegebenenfalls durch Sichten und Sieben eingestellt werden.

Für die Verwendung zur Beschichtung der Metallbänder wird die Korngrößenverteilung entsprechend den obigen Angaben eingestellt. Weiterhin ist es erfindungswesentlich, daß bei Verwendung der Pulverlacke zur Beschichtung der Metallbänder die Korngrößenverteilung so eingestellt wird, daß die Steilheit S der Kornverteilungskurve im Wendepunkt die obengenannten Werte aufweist. Besonders bevorzugt ist der Bereich ≥ 200. Zur Erzielung von Beschichtungen mit besonders guten Eigenschaften werden ganz besonders bevorzugt Pulverlacke eingesetzt, bei denen die Steilheit S der Korngrößenverteilungskurve im Wendepunkt ≥ 300 ist.

Die Steilheit S ist dabei definiert als Grenzwert für f(x₂) - f(x₁) gegen Null von(f(x₂) - f(x₁))/lg ((x₂/x₁)) am Wendepunkt der Kornverteilungskurve. Die Kornverteilungskurve stellt dabei die Auftragung der kumulierten Massenprozente (f(x)) gegen den absoluten Korndurchmesser (x) dar, wobei der Korndurchmesser im logarithmischen Maßstab und die kumulierten Massenprozente im linearen Maßstab dargestellt sind.

Die Einstellung der jeweiligen Korngrößenverteilung der Pulverlacke erfolgt mit geeigneten Mahlaggregaten, ggfs. in Kombination mit geeigneten Sicht- und Siebvorrichtungen, z.B. mit Fließbettgegenstrahlmühlen (AFG) der Firma Alpine, Augsburg, in Kombination mit Turboplex-Feinstsichtern der Firma Alpine, Augsburg.

Das Einbrennen der Pulverlacke erfolgt gewöhnlich bei 200 bis 350 °C während einer Zeit von 40 bis 10 s. Besonders bevorzugt sind die Bereiche von 250 bis 300 °C bei einer Einbrennzeit von 22 bis 14 s.

Die beschriebenen Pulverlacke werden erfindungsgemäß auf verschiedene Substrate appliziert. Im Bedarfsfalle kann über die Pulverlacke eine abziehbare Schutzfolie gezogen werden. Hierfür kommen beispielsweise Folien aus Polyolefinen, Polyamiden, Polyurethanen, Polyestern, Polyacrylaten, Polycarbonate oder einer Mischung dieser polymeren Stoffe in Betracht. Derartige Kunststoffolien weisen gewöhnlich Dicken von 10 bis 500, vorzugsweise 20 bis 200 µm auf.

Aufgrund der vielseitigen Verwendung werden die verschiedensten Trägermaterialien als Substrat für das erfindungsgemäße coil-coating-Verfahren eingesetzt. Als erstes Auswahlkriterium müssen die späteren mechanischen Bearbeitungsschritte berücksichtigt werden. Abkanten, Biegen, Tiefziehen erfordern bestimmte Güten und Festigkeiten, die über die entsprechende Stahloder Aluminiumlegierung sichergestellt werden müssen. Als weiteres Kriterium ist das spätere Einsatzgebiet wichtig. Stahlprodukte, die nicht massiven Korrosionsangriffen ausgesetzt sind, können ohne weitere Vorveredelung im coilcoating-Prozeß verarbeitet werden. Bei höherer Feuchte und klimatischer Belastung wird elektrolytisch verzinktes oder feuerverzinktes Material eingesetzt. Neben der normalen Verzinkung spielen hier die aluminiumreichen Varianten Galfan und Galvalume eine wichtige Rolle. Außer Stahl ist auch Aluminium ein wichtiger erfindungsgemäß einsetzbarer Trägerwerkstoff. Vor dem Beschichten mit dem erfindungsgemäßen Pulverlack muß das Substrat durch eine adäquate Vorbehandlung für den Lackierprozeß vorbereitet werden. Hierzu zählen vor allen Dingen das Reinigen und ähnliche Vorbehandlungsschritte.

Das Verfahren des Beschichtens von Metallbändern wird im folgenden anhand der Figuren näher beschrieben:

Zunächst erfolgt das sogenannte Abcoilen des metallischen Trägerwerkstoffs vom Ablaufhaspel 1. Hieran schließt sich das mechanische Zusammenheften des Anfangs des zu behandelnden Bandes an das Ende des im Beschichtungsdurchlauf befindlichen Bandes 2 an.

Die Vorreinigung 3 wird durchgeführt um eine gute Planlage zu gewährleisten. Die Vorbehandlung wird mit verschiedenen Chemikalien durchgeführt. Die Reinigung erfolgt meistens mit sauren oder alkalischen Lösungen.

In einer weiteren Behandlungsstufe 4 wird gespült, neutralisiert und getrocknet. In Stufe 5 erfolgt das Auftragen der Beschichtung, wobei das Band entweder einoder beidseitig beschichtet wird. Die Applikation erfolgt hierbei nach bekannten Methoden, wie sie beispielsweise in der US-PS 4 183 974 beschrieben sind. Die elektrostatische Aufladung der Pulverteilchen erfolgt durch Reibung (Triboelektrizität) oder elektrostatische Aufladung (Corona-Verfahren).

An den Auftrag des Lackes schließt sich der Durchlauf durch den Ofen 6 an. Die Abkühlung erfolgt in dem Abschnitt 7. Ggfs. kann eine zweite Beschichtungsstation 8 vorgesehen sein, in der eine weitere ein- oder beidseitige Beschichtung erfolgt. In der Station 8 kann wahlweise ein Prägen der Beschichtung oder ein Aufbringen einer Schutzfolie durchgeführt werden. In dem Abschnitt 10 erfolgt schließlich die Abkühlung auf Raumtemperatur, woran sich in der Station 11 die Qualitätskontrolle (visuelle Oberflächeninspektion, Stichproben un Tests) anschließt. Schließlich erfolgt das Aufcoilen, wahlweise Längsteilen oder Abtafeln und Verpacken.

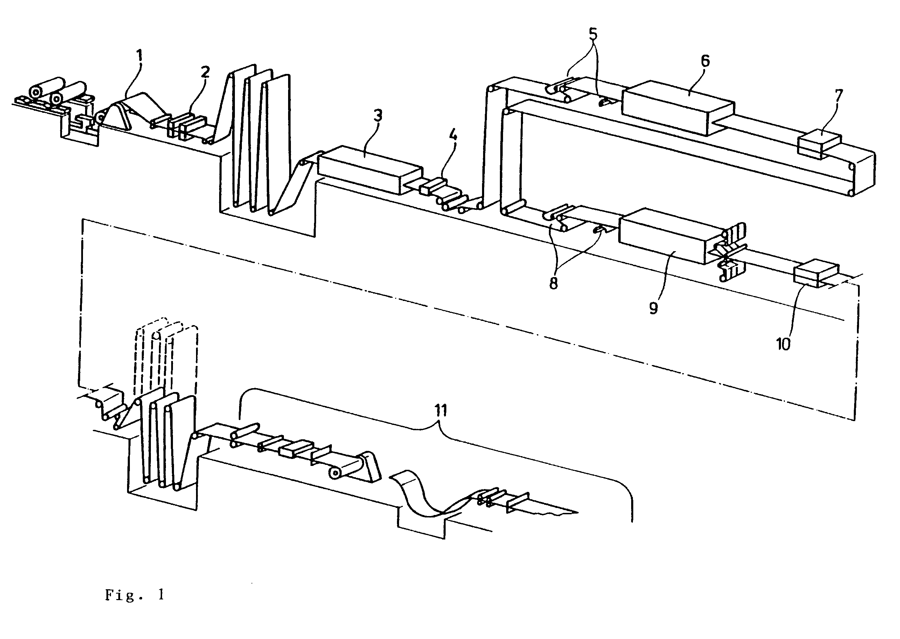

## Patentansprüche

1. Verfahren zur Beschichtung von Metallbändern, vorzugsweise aus Stahl oder Aluminium durch Reinigen, Aufbringen von Pulverlack und Einbrennen
**dadurch gekennzeichnet,daß**
1) der Pulverlack mindestens ein Polyhydroxy-funktionelles Harz A) mit einer Hydroxylzahl von 5 bis 200 mg KOH/g und mindestens einen Polyisocyanathärter B) mit mehr als einer Isocyanatgruppe pro Molekül enthält, und
2) der Pulverlack eine derartige Korngrößenverteilung aufweist, daß
a) mindestens 90 Massenprozent der Pulverlackteilchen eine Teilchengröße zwischen 1 und 150, vorzugsweise 1 und 100 µm aufweisen,
b) die maximale Teilchengröße der Pulverlackteilchen für mindestens 99 Massenprozent der Teilchen ≤ 150 µm beträgt,
c) die mittlere Teilchengröße der Pulverlackteilchen zwischen 5 und 60 µm, vorzugsweise 5 und 40 µm liegt und
d) die Steilheit der Kornverteilungskurve am Wendepunkt ≥ 50, vorzugsweise ≥ 100 ist.

2. Verfahren nach Anspruch 1,
**dadurch gekennzeichnet, daß** ein Pulverlack eingesetzt wird, der eine Korngrößenverteilung aufweist, daß
a) mindestens 90 Massenprozent der Pulverlackteilchen eine Teilchengröße zwischen 1 und 60 µm, bevorzugt zwischen 1 und 40 µm, aufweist,
b) die maximale Teilchengröße der Pulverlackteilchen für mindestens 99 Massenprozent der Teilchen ≤ 100 µm, bevorzugt ≤ 60 µm, beträgt,
c) die mittlere Teilchengröße der Pulverlackteilchen zwischen 5 und 20 µm, bevorzugt zwischen 5 und 12 µm, liegt und
d) die Steilheit der Kornverteilungskurve am Wendepunkt ≥ 100 µm, bevorzugt ≥ 150 µm, ist.

3. Verfahren nach einem der Ansprüche 1 oder 2,
**dadurch gekennzeichnet, daß** der Pulverlack eine derartige Korngrößenverteilung aufweist, daß
a) mindestens 90 Massenprozent der Pulverlackteilchen eine Teilchengröße zwischen 5 und 25 µm aufweisen,
b) die maximale Teilchengröße der Pulverlackteilchen für mindestens 99 Massenprozent der Teilchen ≤ 40 µm beträgt,
c) die mittlere Teilchengröße der Pulverlackteilchen zwischen 5 und 12 µm liegt und
d) die Steilheit der Kornverteilungskurve am Wendepunkt ≥ 200 ist.

4. Verfahren nach einem der Ansprüche 1 bis 3,
**dadurch gekennzeichnet, daß** das Polyhydroxy-funktionelle Harz A) ausgewählt ist aus der Gruppe der Polyester-, Polyurethan-, Polyether-, Polyacrylatund/oder Polysiloxanepolyole.

5. Verfahren nach einem der Ansprüche 1 bis 4,
**dadurch gekennzeichnet, daß** das Polyhydroxy-funktionelle Harz A) ein massenmittleres Molekulargewicht von 500 bis 200.000 aufweist.

6. Verfahren nach einem der Ansprüche 1 bis 5,
**dadurch gekennzeichnet**,daßderPulverlack
A) 10 bis 90 Gew.-%, bezogen auf das Gesamtgewicht des Pulverlacks, des Polyhydroxy-funktionellen Harzes und
B) 10 bis 80 Gew.-%, bezogen auf das Gesamtgewicht des Pulverlacks, der Polyisocyanat-Härterkomponente
enthält.

7. Verfahren nach einem der Ansprüche 1 bis 6,
**dadurch gekennzeichnet, daß** der Pulverlack zusätzlich
C) 0,01 bis 5 Gew.-% eines Härtungskatalysators,
D) ggfs. bis zu 40 Gew.-% Füllstoffe sowie
E) ggfs. 0,01 bis 10 Gew.-% weitere Hilfe- Zusatzstoffe enthält.

8. Verfahren nach nach einem der Ansprüche 1 bis 7,
**dadurch gekennzeichnet, daß** der Pulverlack einen ungesättigten Polyester und ein (Meth)Acrylatgruppen enthaltendes Polyurethan enthält.

9. Verfahren nach einem der Ansprüche 1 bis 8,
**dadurch gekennzeichnet, daß** ein Pulverlack nach einem der Ansprüche 1 bis 8 mit einer Schichtdicke von 7 bis 20 µm, vorzugsweise 10 bis 15 µm, aufgebracht wird.

## Claims

1. Method of coating metal strips, preferably made of steel or aluminum, by cleaning, applying a powder coating and baking,
**characterized in that**
1) the powder coating comprises at least one polyhydroxy-functional resin A) having a hydroxyl number of from 5 to 200 mg of KOH/g and at least one polyisocyanate hardener B) having more than one isocyanate group per molecule, and
2) the powder coating has a particle size distribution such that
a) at least 90 percent by mass of the powder coating particles have a size of between 1 and 150, preferably 1 and 100 µm,
b) the maximum size of the powder coating particles for at least 99 percent by mass of the particles is ≤ 150 µm,
c) the mean size of the powder coating particles is between 5 and 60 µm, preferably 5 and 40 µm, and
d) the slope of the particle distribution curve at the point of inflection is ≥ 50, preferably ≥ 100.

2. Method according to claim 1,
**characterized in that** a powder coating is employed which has a particle size distribution [lacuna] that
a) at least 90 percent by mass of the powder coating particles have a size of between 1 and 60 µm, preferably between 1 and 40 µm,
b) the maximum size of the powder coating particles for at least 99 percent by mass of the particles is ≤ 100 µm, preferably ≤ 60,
c) the mean size of the powder coating particles is between 5 and 20 µm, preferably between 5 and 12 µm, and
d) the slope of the particle distribution curve at the point of inflection is ≥ 100 µm [sic], preferably ≥ 150 µm [sic].

3. Method according to one of claims 1 or 2 [sic],
**characterized in that** the powder coating has a particle size distribution such that
a) at least 90 percent by mass of the powder coating particles have a size of between 5 and 25 µm,
b) the maximum size of the powder coating particles for at least 99 percent by mass of the particles is ≤ 40 µm,
c) the mean size of the powder coating particles is between 5 and 12 µm, and
d) the slope of the particle distribution curve at the point of inflection is ≥ 200.

4. Method according to one of claims 1 to 3,
**characterized in that** the polyhydroxy-functional resin A) is selected from the group of the polyester-, polyurethane-, polyether-, polyacrylate-and/or polysiloxanepolyols.

5. Method according to one of claims 1 to 4,
**characterized in that** the polyhydroxy-functional resin A) has a mass-average molecular weight of from 500 to 200.000.

6. Method according to one of claims 1 to 5,
**characterized in that** the powder coating comprises
A) from 10 to 90% by weight, based on the overall weight of the powder coating, of the polyhydroxy-functional resin and
B) from 10 to 80% by weight, based on the overall weight of the powder coating, of the polyisocyanate hardener component.

7. Method according to one of claims 1 to 6,
**characterized in that** the powder coating additionally comprises
C) from 0.01 to 5% by weight of a curing catalyst,
D) if desired, up to 40% by weight of fillers, and
E) if desired, from 0.01 to 10% by weight of further auxiliaries and additives.

8. Method according to one of claims 1 to 7,
**characterized in that** the powder coating comprises an unsaturated polyester and a polyurethane that contains (meth)acrylic groups.

9. Method according to one of claims 1 to 8,
**characterized in that** a powder coating according to one of claims 1 to 8 having a film thickness of from 7 to 20 µm, preferably from 10 to 15 µm, is applied.

## Revendications

1. Procédé de revêtement de bandes métalliques, de préférence en acier ou en aluminium, par nettoyage, application d'un revêtement pulvérulent et cuisson,
**caractérisé en ce que**
1) le revêtement pulvérulent comprend au moins une résine A) à fonction polyhydroxy, présentant un indice d'hydroxyle de 5 à 200 mg de KOH/g, et au moins un agent durcissant polyisocyanate B) ayant plus d'un groupe isocyanate par molécule, et
2) le revêtement pulvérulent présente une distribution granulométrique telle que
a) au moins 90 pour cent en masse des particules du revêtement pulvérulent présentent une granulométrie comprise entre 1 et 150, de préférence entre 1 et 100 µm,
b) la granulométrie maximale des particules du revêtement pulvérulent pour au moins 99 pour cent en masse des particules est ≤ 15 µm,
c) la granulométrie moyenne des particules du revêtement pulvérulent est comprise entre 5 et 60 µm, de préférence entre 5 et 40 µm, et
d) la pente de la courbe de distribution des particules au point d'inflexion est ≥ 50, de préférence ≥ 100.

2. Procédé selon la revendication 1, **caractérisé en ce que** l'on utilise un revêtement pulvérulent présentant une distribution granulométrique telle que
a) au moins 90 pour cent en masse des particules du revêtement pulvérulent présentent une granulométrie comprise entre 1 et 60 µm, de préférence entre 1 et 40 µm,
b) la granulométrie maximale des particules du revêtement pulvérulent pour au moins 99 pour cent en masse des particules est ≤ 100 µm, de préférence ≤ 60 µm,
c) la granulométrie moyenne des particules du revêtement pulvérulent est comprise entre 5 et 20 µm, de préférence entre 5 et 12 µm, et
d) la pente de la courbe de distribution des particules au point d'inflexion est ≥ 100 µm, de préférence ≥ 150 µm.

3. Procédé selon l'une quelconque des revendications 1 ou 2, **caractérisé en ce que** le revêtement pulvérulent présente une distribution granulométrique telle que
a) au moins 90 pour cent en masse des particules du revêtement pulvérulent présentent une granulométrie comprise entre 5 et 25 µm,
b) la granulométrie maximale des particules du revêtement pulvérulent pour au moins 99 pour cent en masse des particules est ≤ 40 µm,
c) la granulométrie moyenne des particules du revêtement pulvérulent est comprise entre 5 et 12 µm, et
d) la pente de la courbe de distribution des particules au point d'inflexion est ≥ 200.

4. Procédé selon l'une quelconque des revendications 1 à 3, **caractérisé en ce que** la résine A) à fonction polyhydroxy est choisie parmi le groupe constitué des polyester-polyols, des polyuréthane-polyols, des polyéther-polyols, des polyacrylate-polyols et/ou des polysiloxane-polyols.

5. Procédé selon l'une quelconque des revendications 1 à 4, **caractérisé en ce que** la résine A) à fonction polyhydroxy présente un poids moléculaire moyen en masse de 500 à 200 000.

6. Procédé selon l'une quelconque des revendications 1 à 5, **caractérisé en ce que** le revêtement pulvérulent comprend
A) de 10 à 90 % en poids de la résine à fonction polyhydroxy, par rapport au poids total du revêtement pulvérulent, et
B) de 10 à 80 % en poids du composant durcissant polyisocyanate, par rapport au poids total du revêtement pulvérulent.

7. Procédé selon l'une quelconque des revendications 1 à 6, **caractérisé en ce que** le revêtement pulvérulent comprend en outre
C) de 0,01 à 5 % en poids d'un catalyseur de durcissement,
D) éventuellement jusqu'à 40 % en poids de charges ainsi que
E) éventuellement de 0,01 à 10 % en poids d'autres auxiliaires et additifs.

8. Procédé selon l'une quelconque des revendications 1 à 7, **caractérisé en ce que** le revêtement pulvérulent comprend un polyester insaturé et un polyuréthane renfermant des groupes (méth)acrylate.

9. Procédé selon l'une quelconque des revendications 1 à 8, **caractérisé en ce que** l'on applique un revêtement pulvérulent selon l'une quelconque des revendications 1 à 8, présentant une épaisseur de couche de 7 à 20 µm, de préférence de 10 à 15 µm.
